# FASCICULE DE BREVET EUROPEEN

(11) **EP 2 550 699 B1**
(45) Date de publication et mention de la délivrance du brevet: **19.04.2017**
(21) Numéro de dépôt: 11715586.1
(22) Date de dépôt: 22.03.2011
(51) Int. Cl.: C04B 26/08, C04B 26/28, C08J 3/21, C08J 3/22, H01G 11/32, H01B 1/24, H01M 4/62, H01M 4/136, H01M 4/58

(54) **MELANGE-MAITRE DE CHARGES CONDUCTRICES CARBONEES POUR LES FORMULATIONS LIQUIDES, NOTAMMENT DANS LES BATTERIES LI-ION**
MASTERBATCH AUS LEITFÄHIGEN FÜLLELEMENTEN AUF KOHLENSTOFFBASIS FÜR FLÜSSIGKEITSFORMULIERUNGEN, SPEZIELL IN LITHIUMIONENBATTERIEN
MASTERBATCH OF CARBON-BASED CONDUCTIVE FILLERS FOR LIQUID FORMULATIONS, ESPECIALLY IN LI-ION BATTERIES

(30) Priorité: 23.09.2010 FR 1057669; 23.03.2010 FR 1052091
(43) Date de publication de la demande: 30.01.2013
(73) Titulaire: Arkema France, 92700 Colombes (FR)
(72) Inventeur: NICOLAS, Serge, F-64140 Lons (FR); KORZHENKO, Alexander, 64000 Pau (FR); MERCERON, Amélie, F-64230 Aussevielle (FR); HAVEL, Mickael, Wayne PA 19087 (US); LECOMTE, Yvan, F-64370 Arthez De Bearn (FR)
(74) Mandataire: Bonnel, Claudine
(86) Numéro de dépôt international: PCT/FR2011/050588
(87) Numéro de publication internationale: WO 2011/117530

(56) Documents cités:
- EP-A1- 2 081 244
- FR-A- 1 307 346
- FR-A1- 2 893 947
- FR-A1- 2 901 154
- FR-A1- 2 921 391
- JP-A- 10 255 844

## Description

La présente invention concerne un mélange-maître contenant des charges conductrices carbonées, telles que des nanotubes de carbone, ainsi que sa méthode de préparation et l'utilisation de ce mélange-maître pour la fabrication de composants de batteries Li-ion et de supercapacités, et plus généralement pour intégrer des nanotubes de carbone dans des formulations liquides à base aqueuse ou organique.

Une batterie Li-ion comprend au moins une électrode négative ou anode couplée à un collecteur de courant en cuivre, une électrode positive ou cathode couplée avec un collecteur de courant en aluminium, un séparateur, et un électrolyte. L'électrolyte est constitué d'un sel de lithium, généralement l'hexafluorophosphate de lithium, mélangé à un solvant qui est un mélange de carbonates organiques, choisis pour optimiser le transport et la dissociation des ions. Une constante diélectrique élevée favorise la dissociation des ions, et donc, le nombre d'ions disponibles dans un volume donné, alors qu'une faible viscosité est favorable à la diffusion ionique qui joue un rôle essentiel, entre autres paramètres, dans les vitesses de charge et décharge du système électrochimique.

Une électrode comprend généralement au moins un collecteur de courant sur lequel est déposé un matériau composite qui est constitué par : un matériau dit actif car il présente une activité électrochimique vis-à-vis du lithium, un polymère qui joue le rôle de liant et qui est généralement un copolymère du fluorure de vinylidène pour l'électrode positive et des liants à base aqueuse, de type carboxyméthycellulose ou des latex styrène-butadiène, pour l'électrode négative, plus un additif conducteur électronique qui est généralement le noir de carbone Super P ou le noir d'acétylène.

Lors de la charge, le lithium s'insère dans le matériau actif d'électrode négative (anode) et sa concentration est maintenue constante dans le solvant par la désintercalation d'une quantité équivalente du matériau actif de l'électrode positive (cathode). L'insertion dans l'électrode négative se traduit par une réduction du lithium et il faut donc apporter, via un circuit extérieur, les électrons à cette électrode, en provenance de l'électrode positive. A la décharge, les réactions inverses ont lieu.

Il a été mis en évidence dans de précédentes études que le fait de substituer le noir de carbone ou le noir d'acétylène par des nanotubes de carbone (NTC), ou bien d'ajouter des NTC à de tels additifs conducteurs, présente de nombreux avantages : augmentation de la conductivité électrique, meilleure intégration autour des particules de matière active, bonnes propriétés mécaniques intrinsèques, capacité à former un réseau électrique mieux connecté dans la masse de l'électrode et entre le collecteur métallique et la matière active, bon maintien de la capacité en cyclage dans le matériau composite d'électrode...

A titre d'exemple, K. Sheem et al. (J. Power Sources, 158, (2006), 1425) montrent que les NTC à 5% en poids par rapport aux matériaux d'électrode peuvent apporter une meilleure tenue au cyclage que le noir de carbone Super P, avec LiCoO₂ comme matériau de cathode. Quant à W. Guoping et al. (Solid State Ionics 179 (2008) 263-268), ils rapportent une meilleure tenue de la capacité au cyclage et en fonction de la densité de courant d'une cathode LiCoO₂ lorsque l'électrode contient 3% en poids de NTC au lieu de 3% en poids de noir d'acétylène ou de nanofibres.

Cependant, l'introduction des nanotubes de carbone dans les formulations des matériaux constituant les électrodes soulève tout de même encore quelques points négatifs qui nécessitent d'être améliorés.

Lorsque la dispersion des NTC est réalisée directement dans les formulations liquides (surtout dans les bases de solvants organiques), on assiste à une forte viscosification de la dispersion et une faible stabilité d'une telle dispersion. Pour surmonter cet inconvénient, on a recours à des mélangeurs à billes, broyeurs et mélangeurs à fort cisaillement. Toutefois, le taux de NTC susceptibles d'être introduits dans les formulations liquides reste limité à 1-2%. Ces difficultés limitent l'utilisation pratique des NTC dans les formulations des matériaux constituants les électrodes en raison de l'agrégation des NTC due à leur structure très enchevêtrée.

En outre, d'un point de vue toxicologique, les NTC se présentent généralement sous la forme de grains de poudre agglomérés dont les dimensions moyennes sont de l'ordre de quelques centaines de microns. Les différences de dimensions, de forme, et de propriétés physiques font que les propriétés toxicologiques des poudres de NTC ne sont pas encore parfaitement connues. Il serait donc préférable de pouvoir travailler avec des NTC sous forme solide agglomérée de taille macroscopique.

A cet égard, le document US2004/0160156 décrit une méthode de préparation d'une électrode pour batterie à partir d'un mélange-maître, sous la forme de granules composés de NTC et d'une résine servant de liant, auquel est ajoutée une suspension de matière active d'électrode.

Dans ce document, la résine est présente en grande quantité au sein du mélange-maître, puisque les NTC sont présents dans des proportions allant de 5 à 20 parties en poids pour 100 parties en poids de résine. Ce taux important de liant est problématique pour le formulateur de matériaux d'électrodes qui souhaite utiliser des mélanges-maîtres « universels » dans des compositions prédéfinies sans engendrer de contraintes de formulation, en particulier sans limiter le choix du liant utilisé dans ces compositions.

C'est pourquoi, il serait avantageux pour le formulateur de disposer de mélanges-maîtres prêts à l'emploi pouvant être utilisés directement dans une diversité de formulations pour la fabrication d'électrodes (vernis, encres, film, etc.) en vue d'augmenter leur conductivité électrique.

Or, la Demanderesse a découvert que ce besoin pouvait être satisfait en préparant un mélange-maître de nanotubes de carbone sous forme solide agglomérée contenant un taux de liant du même ordre de grandeur que celui des NTC. Elle a également mis au point un procédé de fabrication de ce mélange-maître, qui permet une dispersion efficace et homogène des nanotubes de carbone au sein du mélange-maître et autour du matériau actif d'électrode. Enfin, il est apparu à la Demanderesse que ce mélange-maître pouvait être utilisé pour intégrer des nanotubes de carbone dans d'autres formulations liquides.

Le document EP 2 081 244 décrit une composition à base de nanotubes de carbone, d'un solvant et d'un liant, mais qui ne se présente pas sous forme solide agglomérée puisqu'elle est destinée à être pulvérisée sur une couche de matériau actif d'électrode, et non à être employée comme mélange-maître à diluer dans une composition d'électrode.

Il est par ailleurs apparu à la Demanderesse que cette invention pouvait également être appliquée à d'autres charges conductrices carbonées que les nanotubes et en particulier aux nanofibres de carbone et au noir de carbone, qui sont également susceptibles de poser des problèmes de sécurité en raison de leur caractère pulvérulent et de leur aptitude à générer des fines dans les ateliers de fabrication.

Les nanofibres de carbone sont, comme les nanotubes de carbone, des nanofilaments produits par dépôt chimique en phase vapeur (ou CVD) à partir d'une source carbonée qui est décomposée sur un catalyseur comportant un métal de transition (Fe, Ni, Co, Cu), en présence d'hydrogène, à des températures de 500 à 1200°C. Toutefois, ces deux charges carbonées se différencient par leur structure (I. MARTIN-GULLON et al., Carbon 44 (2006) 1572-1580). En effet, les nanotubes de carbone sont constitués d'un ou plusieurs feuillets de graphène enroulés manière concentrique autour de l'axe de la fibre pour former un cylindre ayant un diamètre de 10 à 100 nm. Au contraire, les nanofibres de carbone se composent de zones graphitiques plus ou moins organisées (ou empilements turbostratiques) dont les plans sont inclinés à des angles variables par rapport à l'axe de la fibre. Ces empilements peuvent prendre la forme de plaquettes, d'arêtes de poisson ou de coupelles empilées pour former des structures ayant un diamètre allant généralement de 100 nm à 500 nm voire plus. Par ailleurs, le noir de carbone est un matériau carboné colloïdal fabriqué industriellement par combustion incomplète de produits pétroliers lourds, qui se présente sous forme de sphères de carbone et d'agrégats de ces sphères et dont les dimensions sont généralement comprises entre 10 et 1000 nm.

Le document de brevet japonais JP 10 255844 décrit la fabrication d'une batterie dont l'électrode positive est réalisée au moyen d'un mélange-maître contenant un matériau conducteur choisi parmi le noir de fourneau, le noir d'acétylène et le graphite.

Le document FR 1 307 346 décrit la préparation de mélanges-maîtres contenant du caoutchouc, du noir de carbone et éventuellement un plastifiant ou une huile de charge. Ce mélange-maître se présente sous forme liquide, et ne contient qu'un faible taux de noir de carbone par rapport au poids total du mélange-maître. Il n'est utilisé qu'après évaporation du solvant.

La présente invention porte par conséquent, selon un premier aspect, sur un mélange-maître sous forme solide agglomérée comprenant :
a) des nanofibres et/ou nanotubes de carbone dont le taux est compris entre 15% et 40% en poids, de préférence entre 20% et 35% en poids, par rapport au poids total du mélange-maître ;
b) au moins un solvant ;
c) au moins un liant polymère, qui représente de 1% à 40% en poids, de préférence de 2% à 30% en poids par rapport au poids total du mélange-maître.

Dans la suite de cette description, à des fins de simplicité, on désigne par "charge conductrice carbonée" une charge comprenant au moins un élément du groupe formé des nanotubes et nanofibres de carbone ou un mélange de ceux-ci en toutes proportions.

Le rapport massique liant/charge conductrice carbonée est de préférence inférieur à 2.

Les nanotubes de carbone entrant dans la composition du mélange-maître selon l'invention peuvent être du type monoparoi, à double paroi ou à parois multiples. Les nanotubes à double paroi peuvent notamment être préparés comme décrit par FLAHAUT et al dans Chem. Com. (2003), 1442. Les nanotubes à parois multiples peuvent de leur côté être préparés comme décrit dans le document WO 03/02456.

Les nanotubes ont habituellement un diamètre moyen allant de 0,1 à 100 nm, de préférence de 0,4 à 50 nm et, mieux, de 1 à 30 nm, voire de 10 à 15 nm, et avantageusement une longueur de 0,1 à 10 µm. Leur rapport longueur/diamètre est de préférence supérieur à 10 et le plus souvent supérieur à 100. Leur surface spécifique est par exemple comprise entre 100 et 300 m²/g, avantageusement entre 200 et 300 m²/g, et leur densité apparente peut notamment être comprise entre 0,05 et 0,5 g/cm³ et plus préférentiellement entre 0,1 et 0,2 g/cm³. Les nanotubes multiparois peuvent par exemple comprendre de 5 à 15 feuillets (ou parois) et plus préférentiellement de 7 à 10 feuillets. Ces nanotubes peuvent ou non être traités.

Un exemple de nanotubes de carbone bruts est notamment disponible dans le commerce auprès de la société ARKEMA sous la dénomination commerciale Graphistrength^{®} C100.

Ces nanotubes peuvent être purifiés et/ou traités (par exemple oxydés) et/ou broyés et/ou fonctionnalisés, avant leur mise en oeuvre dans le procédé selon l'invention.

Le broyage des nanotubes peut être notamment effectué à froid ou à chaud et être réalisé selon les techniques connues mises en oeuvre dans des appareils tels que broyeurs à boulets, à marteaux, à meules, à couteaux, à jet de gaz ou tout autre système de broyage susceptible de réduire la taille du réseau enchevêtré de nanotubes. On préfère que cette étape de broyage soit pratiquée selon une technique de broyage par jet de gaz et en particulier dans un broyeur à jet d'air.

La purification des nanotubes bruts ou broyés peut être réalisée par lavage à l'aide d'une solution d'acide sulfurique, de manière à les débarrasser d'éventuelles impuretés minérales et métalliques résiduelles, comme par exemple le fer, provenant de leur procédé de préparation. Le rapport pondéral des nanotubes à l'acide sulfurique peut notamment être compris entre 1 :2 et 1 :3. L'opération de purification peut par ailleurs être effectuée à une température allant de 90 à 120°C, par exemple pendant une durée de 5 à 10 heures. Cette opération peut avantageusement être suivie d'étapes de rinçage à l'eau et de séchage des nanotubes purifiés. Les nanotubes peuvent en variante être purifiés par traitement thermique à haute température, typiquement supérieur à 1000°C.

L'oxydation des nanotubes est avantageusement réalisée en mettant ceux-ci en contact avec une solution d'hypochlorite de sodium renfermant de 0,5 à 15% en poids de NaOCl et de préférence de 1 à 10% en poids de NaOCl, par exemple dans un rapport pondéral des nanotubes à l'hypochlorite de sodium allant de 1:0,1 à 1:1. L'oxydation est avantageusement réalisée à une température inférieure à 60°C et de préférence à température ambiante, pendant une durée allant de quelques minutes à 24 heures. Cette opération d'oxydation peut avantageusement être suivie d'étapes de filtration et/ou centrifugation, lavage et séchage des nanotubes oxydés.

La fonctionnalisation des nanotubes peut être réalisée par greffage de motifs réactifs tels que des monomères vinyliques à la surface des nanotubes. Le matériau constitutif des nanotubes est utilisé comme initiateur de polymérisation radicalaire après avoir été soumis à un traitement thermique à plus de 900°C, en milieu anhydre et dépourvu d'oxygène, qui est destiné à éliminer les groupes oxygénés de sa surface. Il est ainsi possible de polymériser du méthacrylate de méthyle ou du méthacrylate d'hydroxyéthyle à la surface de nanotubes de carbone en vue de faciliter notamment leur dispersion dans le PVDF ou les polyamides.

On utilise de préférence dans la présente invention des nanotubes bruts éventuellement broyés, c'est-à-dire des nanotubes qui ne sont ni oxydés ni purifiés ni fonctionnalisés et n'ont subi aucun autre traitement chimique et/ou thermique.

Par ailleurs, on préfère utiliser des nanofibres de carbone ayant un diamètre de 100 à 200 nm, par exemple d'environ 150 nm (VGCF^{®} de SHOWA DENKO), et avantageusement une longueur de 100 à 200 µm.

Le liant polymère utilisé dans la présente invention est choisi avantageusement dans le groupe constitué par les polysaccharides, les polysaccharides modifiés, les polyéthers, les polyesters, les polymères acryliques, les polycarbonates, les polyimines, les polyamides, les polyacrylamides, les polyuréthanes, les polyépoxydes, les polyphosphazènes, les polysulfones, les polymères halogénés, les caoutchoucs naturels, les élastomères fonctionnalisés ou non, notamment les élastomères à base de styrène, butadiène et/ou isoprène, et leurs mélanges. Ces liants polymériques peuvent être utilisés sous forme solide ou sous forme de solution ou de dispersion liquide (type latex) ou encore sous forme de solution supercritique. On préfère utiliser un liant polymérique sous forme de solution.

De façon préférée, pour une utilisation dans la fabrication d'une électrode, le liant polymère est choisi dans le groupe constitué par les polymères halogénés et de façon encore plus préférée parmi les polymères fluorés définis notamment de la façon suivante :
(i) ceux comprenant au moins 50% molaire d'au moins un monomère de formule (I) :

   CFX₁=CX₂X₃ (I)

   où X₁, X₂ et X₃ désignent indépendamment un atome d'hydrogène ou d'halogène (en particulier de fluor ou de chlore), tels que le poly(fluorure de vinylidène) (PVDF), de préférence sous forme α, le poly(trifluoroéthylène) (PVF3), le polytétrafluoroéthylène (PTFE), les copolymères de fluorure de vinylidène avec soit l'hexafluoropropylène (HFP), soit le trifluoroéthylène (VF3), soit le tétrafluoroéthylène (TFE), soit le chlorotrifluoroéthylène (CTFE), les copolymères fluoroéthylène / propylène (FEP), les copolymères d'éthylène avec soit le fluoroéthylène/propylène (FEP), soit le tétrafluoroéthylène (TFE), soit le chlorotrifluoroéthylène (CTFE) ;
(ii) ceux comprenant au moins 50% molaire d'au moins un monomère de formule (II) :

   R-O-CH-CH₂ (II)

   où R désigne un radical alkyle perhalogéné (en particulier perfluoré), tels que le perfluoropropyl vinyléther (PPVE), le perfluoroéthyl vinyléther (PEVE) et les copolymères d'éthylène avec le perfluorométhylvinyl éther (PMVE).

Lorsqu'il est destiné à être intégré dans des formulations en milieu aqueux, le mélange-maître selon l'invention renferme avantageusement, en tant que liant, au moins un polysaccharide modifié tel qu'une cellulose modifiée, en particulier la carboxyméthylcellulose. Celui-ci peut se présenter sous forme de solution aqueuse ou sous forme solide ou encore sous forme de dispersion liquide.

Le solvant utilisé dans la présente invention peut être un solvant organique ou de l'eau ou leurs mélanges en toutes proportions. On peut citer parmi les solvants organiques la N-méthyl pyrrolidone (NMP), le diméthyl sulfoxide (DMSO), le diméthylformamide (DMF), les cétones, les acétates, les furanes, les alkylcarbonates, les alcools et leurs mélanges. La NMP, le DMSO et le DMF sont préférés pour une utilisation dans la présente invention.

La quantité de solvant présente dans le mélange-maître va de 20 à 84% en poids, plus préférentiellement de 50 à 75% en poids et, mieux de 60 à 75% en poids par rapport au poids total du mélange-maître, pour autant que l'ensemble des constituants du mélange-maître représente 100%.

Le mélange-maître selon l'invention renferme ainsi avantageusement : de 20 à 30% en poids de nanotubes de carbone, de 2 à 5% en poids de résine PVDF et de 65 à 75% en poids de NMP. Un exemple d'un tel mélange-maître est celui renfermant : 25% en poids de NTC, 4% en poids de PVDF et 71% en poids de NMP, disponible sous forme de granulés, qui est notamment commercialisé par la société ARKEMA sous la dénomination commerciale CM19-25.

Selon un second aspect, l'invention concerne un procédé de préparation dudit mélange-maître comprenant :
(i) la dissolution d'une poudre du polymère liant dans le solvant, pour former une solution ;
(ii) le mélange de ladite solution avec des nanofibres et/ou nanotubes de carbone dans un dispositif de compoundage ;
(iii) le malaxage dudit mélange.

La préparation du mélange-maître est ainsi réalisée en trois étapes successives.

Un mode de réalisation de l'étape i) consiste à dissoudre la poudre du polymère liant dans le solvant en agitant la solution ainsi formée dans un intervalle de temps compris entre 30 minutes et 2 heures à une température comprise entre 0°C et 100°C, de préférence entre 20°C et 60°C.

Un mode de réalisation de l'étape ii) consiste à introduire dans un malaxeur ou dispositif de compoundage les charges conductrices carbonées et la solution de polymère issue de l'étape i) à une température d'introduction comprise entre 10°C et 90°C.

Les charges conductrices carbonées et la solution de polymère peuvent être mélangées avant d'être introduites dans le malaxeur. Dans ce cas, les charges conductrices carbonées et la solution de polymère sont introduites simultanément dans la même zone d'alimentation du malaxeur, notamment de type BUSS^{®}. Dans le cas où le mélange de charges conductrices carbonées avec la solution de polymère est effectué après introduction dans le malaxeur, les charges conductrices carbonées et la solution de polymère sont introduites successivement dans la même zone d'alimentation du malaxeur ou bien dans deux zones d'alimentation distinctes.

Un mode de réalisation de l'étape iii) consiste à procéder au malaxage du mélange par voie de compoundage, avantageusement à l'aide d'une extrudeuse à double vis co-rotative ou contre-rotative ou à l'aide d'un co-malaxeur (notamment de type BUSS^{®}) comprenant un rotor pourvu d'ailettes adaptées à coopérer avec des dents montées sur un stator. Le malaxage peut être réalisé à une température comprise de préférence entre 20°C et 90°C.

Les dispositifs de compoundage sont bien connus de l'homme du métier et comprennent généralement des moyens d'alimentation, notamment au moins une trémie pour les matériaux pulvérulents et/ou au moins une pompe d'injection pour les matériaux liquides ; des moyens de malaxage à fort cisaillement, par exemple une extrudeuse à double vis co-rotative ou contre-rotative ou un co-malaxeur, comprenant habituellement une vis sans fin disposée dans un fourreau (tube) chauffé ; une tête de sortie qui donne sa forme au matériau sortant ; et des moyens de refroidissement, sous air ou à l'aide d'un circuit d'eau, du matériau. Celui-ci se trouve généralement sous forme de jonc sortant en continu du dispositif et qui peut être découpé ou mis sous forme de granulés. D'autres formes peuvent toutefois être obtenues en adaptant une filière de la forme voulue sur la filière de sortie.

Des exemples de co-malaxeurs utilisables selon l'invention sont les co-malaxeurs BUSS^{®} MDK 46 et ceux de la série BUSS^{®} MKS ou MX, commercialisés par la société BUSS AG, qui sont tous constitués d'un arbre à vis pourvu d'ailettes, disposé dans un fourreau chauffant éventuellement constitué de plusieurs parties et dont la paroi interne est pourvue de dents de malaxage adaptées à coopérer avec les ailettes pour produire un cisaillement de la matière malaxée. L'arbre est entraîné en rotation, et pourvu d'un mouvement d'oscillation dans la direction axiale, par un moteur. Ces co-malaxeurs peuvent être équipés d'un système de fabrication de granulés, adaptés par exemple à leur orifice de sortie, qui peut être constitué d'une vis d'extrusion.

Les co-malaxeurs utilisables selon l'invention ont de préférence un rapport de vis L/D allant de 7 à 22, par exemple de 10 à 20, tandis que les extrudeuses co-rotatives ont avantageusement un rapport L/D allant de 15 à 56, par exemple de 20 à 50.

La dispersion des charges conductrices carbonées ainsi réalisée est efficace et homogène. De plus, il est possible de modifier la surface des charges conductrices carbonées, en particulier des NTC, durant le compoundage avec des additifs favorisant l'intégration de ces charges dans les formulations liquides.

Le mélange-maître ainsi obtenu peut ensuite éventuellement être séché, par tout procédé connu (étuve ventilée ou sous vide, infra rouge, induction, microondes, etc...), dans le but notamment d'éliminer tout ou partie du solvant et d'obtenir ainsi un mélange-maître plus concentré en charges conductrices carbonées, renfermant par exemple de 20 à 98% en poids de ces charges, de préférence de 25 à 60%, voire de 40 à 60% dans le cas d'un solvant aqueux ou de 60 à 95% dans le cas d'un solvant organique, et présentant avantageusement un rapport massique liant/charge carbonée inférieur à 2, voire inférieur à 1,6. Ce mode de réalisation convient plus particulièrement aux mélanges-maîtres destinés à être introduits dans des formulations liquides.

La présente invention porte donc également sur un mélange-maître concentré, caractérisé en ce qu'il est obtenu par élimination de tout ou partie du solvant du mélange-maître décrit précédemment.

En variante, le mélange-maître peut être utilisé tel quel, sous la forme de granulés ou d'autres formes solides agglomérées, dont le conditionnement facilite leur stockage.

Le mélange-maître obtenu au terme de ce procédé et éventuellement concentré peut être utilisé pour la fabrication d'électrodes pour les batteries Li-ion ou les supercapacités, pour la fabrication de peintures, d'encres, d'adhésifs, de revêtements primaires, de composites céramiques et bétons, de composites thermodurcissables, de compositions d'ensimage des fibres ou de traitement de textiles, notamment.

La présente invention a donc également pour objet l'utilisation du mélange-maître (éventuellement concentré) tel que décrit précédemment pour la préparation de formulations liquides.

Selon un aspect particulier, l'invention porte également sur un procédé de préparation d'une électrode, comprenant les étapes suivantes :
a) La préparation d'un mélange par dispersion dans un solvant de dispersion du mélange-maître (éventuellement concentré) décrit précédemment, contenant au moins un premier liant et éventuellement au moins un premier solvant;
b) La préparation d'une solution par dissolution d'au moins un second liant polymère dans au moins un second solvant ;
c) L'ajout d'un matériau actif d'électrode à ladite solution ;
d) Le mélange des produits issus des étapes a) et c) ;
e) Le dépôt de la composition ainsi obtenue sur un substrat pour former un film ;
f) Le séchage dudit film.

Il est bien entendu que le procédé ci-dessus peut comprendre d'autres étapes préliminaires, intermédiaires ou subséquentes, pour autant qu'elles n'affectent pas négativement l'obtention du film d'électrode recherché. On peut ainsi notamment prévoir une étape intermédiaire entre les étapes d) et e), comprenant l'ajout d'une partie du second liant, par exemple en solution dans le premier solvant, au moyen, notamment, d'un agitateur de type floculateur.

Par « premier liant », on entend le liant utilisé lors de la préparation du mélange-maître décrit précédemment. Par « premier solvant », on entend le solvant utilisé lors de la préparation du mélange-maître décrit précédemment.

Lors de l'étape (a), le mélange-maître est dispersé dans un solvant de dispersion qui peut correspondre au premier solvant ou être différent de celui-ci. Le fait que le mélange-maître se trouve sous forme solide agglomérée comprenant un fort taux de solvant permet de faciliter la dispersion des charges conductrices carbonées, en particulier des NTC, dans le milieu. De même, lorsque le mélange-maître se trouve sous forme séchée, la grande porosité du solide « sec » permet de faciliter le mouillage du solide et donc la dispersion des charges conductrices carbonées dans le milieu.

Lors de cette étape (a), le mélange-maître contenant les charges conductrices carbonées est dispersé à l'aide d'un mélangeur adapté qui peut être soit un mélangeur à hélice, avec un mobile du type hélice de marine, soit un mélangeur-disperseur du type « floculateur » ou du type « rotor-stator ».

Le système floculateur correspond à un agitateur dont le mobile est constitué d'un disque muni de griffes perpendiculaires au plan du disque, ce qui permet d'obtenir un cisaillement local important.

Le système rotor-stator comprend généralement un rotor commandé par un moteur et pourvu de systèmes de guidage de fluide perpendiculaires à l'axe du rotor, tels que des lames ou pales disposées sensiblement radialement ou un disque plat pourvu de dents périphériques, ledit rotor étant éventuellement pourvu d'une couronne dentée, et un stator disposé de façon concentrique par rapport au rotor, et à une faible distance à l'extérieur de celui-ci, ledit stator étant équipé sur au moins une portion de sa circonférence d'ouvertures, ménagées par exemple dans une grille ou définissant entre elles une ou plusieurs rangées de dents, qui sont adaptées au passage du fluide aspiré dans le rotor et éjecté par les systèmes de guidage vers lesdites ouvertures. Une ou plusieurs des dents précitées peuvent être pourvues d'arêtes vives. Le fluide est ainsi soumis à un cisaillement important, à la fois dans l'entrefer entre le rotor et le stator et au travers des ouvertures ménagées dans le stator.

Un tel système de rotor-stator est notamment commercialisé par la société SILVERSON sous la dénomination commerciale Silverson^{®} L4RT. Un autre type de système rotor-stator est commercialisé par la société IKA-WERKE sous la dénomination commerciale Ultra-Turrax^{®}. D'autres systèmes rotor-stator encore sont constitués des moulins colloïdaux et des mélangeurs à fort cisaillement de type rotor-stator, tels que les appareils commercialisés par la société IKA-WERKE ou par la société ADMIX.

On préfère selon l'invention que la vitesse du rotor soit réglée à au moins 1000 tours/min et de préférence à au moins 3000 tours/min voire à au moins 5000 tours/min. En outre, on préfère que la largeur de l'entrefer entre le rotor et le stator soit de moins de 1 mm et de préférence de moins de 200 µm, plus préférentiellement de moins de 100 µm et, mieux, de moins de 50 µm voire de moins de 40 µm. Par ailleurs, le système rotor-stator utilisé selon l'invention confère avantageusement un cisaillement de 1000 à 10⁹ s⁻¹.

L'étape (b) consiste en la dissolution d'un liant polymère, qui peut correspondre au premier liant utilisé dans la préparation du mélange-maître ou être différent de celui-ci, dans un solvant qui peut correspondre au premier solvant utilisé dans la préparation du mélange-maître ou au solvant de dispersion ou être différent de ceux-ci. Lors de cette étape, des agitateurs de type « floculateur » sont préférés. Elle est suivie de l'ajout d'un matériau actif d'électrode, qui peut être dispersé sous agitation sous forme de poudre dans le mélange issu de l'étape (b).

Le matériau actif d'électrode introduit lors de l'étape (c) est choisi dans le groupe constitué par :
i) les oxydes de métaux de transition à structure spinelle de type LiM₂O₄, où M représente un atome métallique contenant au moins un des atomes métalliques sélectionnés dans le groupe formé par Mn, Fe, Co, Ni, Cu, Mg, Zn, V, Ca, Sr, Ba, Ti, Al, Si, B et Mo, lesdits oxydes contenant de préférence au moins un atome de Mn et/ou de Ni ;
ii) les oxydes de métaux de transition à structure lamellaire de type LiMO₂ où M représente un atome métallique contenant au moins un des atomes métalliques sélectionnés dans le groupe formé par Mn, Fe, Co, Ni, Cu, Mg, Zn, V, Ca, Sr, Ba, Ti, Al, Si, B et Mo, lesdits oxydes contenant de préférence au moins un des atomes sélectionnés dans le groupe formé par Mn, Co et Ni ;
iii) les oxydes à charpentes polyanioniques de type LiM_{y}(XO_{z})ₙ où :
   ∘ M représente un atome métallique contenant au moins un des atomes métalliques sélectionnés dans le groupe formé par Mn, Fe, Co, Ni, Cu, Mg, Zn, V, Ca, Sr, Ba, Ti, Al, Si, B et Mo, et
   ∘ X représente un des atomes sélectionnés dans le groupe formé par P, Si, Ge, S et As,
   de préférence LiFePO₄,
iv) les oxydes à base de vanadium,
v) le graphite,
vi) les titanates.

Les matériaux actifs d'électrodes i) à iv) sont davantage adaptés à la préparation de cathodes, tandis que les matériaux actifs d'électrodes v) et vi) sont davantage adaptés à la préparation d'anodes.

Le produit issu de l'étape (c) est mélangé avec celui issu de l'étape (a) (étape (d)), éventuellement après mélange au floculateur. Le mélange peut s'effectuer à l'aide de moyens mécaniques quelconques, pour autant qu'ils permettent d'obtenir une dispersion homogène. Par «dispersion homogène» on entend de préférence, au sens de la présente invention, que le mélange de la dispersion issue de l'étape (a) avec la dispersion issue de l'étape (c), observé au microscope électronique après 30 minutes de traitement, voire après 20 minutes de traitement, ne révèle pas (dans le cas des NTC) d'agrégats de taille supérieure à 50 µm, de préférence supérieure à 30 µm, voire supérieure à 20 µm, mesurés selon leur plus longue dimension.

On préfère selon l'invention que le mélange de l'étape d) s'effectue à l'aide d'un mélangeur de type « floculateur » ou à l'aide de systèmes « rotor-stator » de type Silverson^{®} et/ou à l'aide de broyeurs à billes et/ou broyeurs planétaires.

Les proportions des différents composés utilisés dans le procédé ci-dessus sont ajustées de telle manière que le film obtenu renferme avantageusement de 1 à 2% en poids de charges conductrices carbonées.

Grâce au procédé selon l'invention, il est notamment possible de distribuer les nanofibres et nanotubes de carbone de telle façon qu'ils forment un maillage autour des particules de matériau actif et jouent ainsi un rôle à la fois d'additif conducteur mais aussi de maintien mécanique, important pour accommoder les variations volumiques lors des étapes de charge-décharge. D'une part, ils assurent la distribution aux particules de matériau actif des électrons et, d'autre part, en raison de leur longueur et de leur souplesse, ils forment des ponts électriques entre les particules de matériau actif qui se déplacent suite à leur variation de volume. Lorsqu'ils sont utilisés seuls, les additifs conducteurs usuels (carbone SP, le noir d'acétylène et graphite), avec leur facteur de forme peu élevé, sont moins efficaces pour assurer le maintien au cours du cyclage du transport des électrons depuis le collecteur de courant. En effet, avec ce type d'additifs conducteurs, les chemins électriques sont formés par la juxtaposition de grains et les contacts entre eux sont facilement rompus suite à l'expansion volumique des particules du matériau actif.

Lors de l'étape (e), le film obtenu à partir de la suspension issue de l'étape (d) peut être déposé sur un substrat par tout moyen conventionnel, par exemple par extrusion, par épandage (tape casting), par enduction ou par pulvérisation (spray drying) suivi d'une étape de séchage (étape (f)).

Le substrat peut en particulier être un collecteur de courant. On obtient ainsi une électrode.

L'invention permet d'obtenir une électrode, anode ou cathode (en particulier une cathode), composite susceptible d'être obtenue comme décrit ci-dessus, à partir du mélange-maître selon l'invention.

Selon un autre aspect, l'invention porte également sur un procédé de préparation d'un matériau actif composite pour électrode, comprenant les étapes suivantes :
a) La mise à disposition d'un matériau actif d'électrode sous forme d'une solution ou d'une dispersion aqueuse ;
b) L'ajout et le mélange du mélange-maître (éventuellement concentré) décrit précédemment, ledit mélange-maître contenant un liant hydrosoluble ou hydrodispersible, à la solution ou dispersion aqueuse obtenue à l'étape (a) ;
c) L'essorage et le séchage du mélange obtenu à l'étape (b).

Il est bien entendu que le procédé ci-dessus peut comprendre d'autres étapes préliminaires, intermédiaires ou subséquentes, pour autant qu'elles n'affectent pas négativement l'obtention du matériau composite pour électrode recherché. On peut ainsi notamment prévoir une ou plusieurs étapes intermédiaires entre les étapes (a) et (b) et/ou entre les étapes (b) et (c), comprenant le lavage, la filtration ou toute autre étape de purification du mélange.

Le matériau actif d'électrode défini ci-dessus, est par exemple celui décrit dans le document de brevet FR 2 865 576. Un tel procédé se caractérise par la réaction sous atmosphère contrôlée d'un précurseur du matériau actif d'électrode, par exemple Li₂HFO₄, avec un complexe de fer (III). Le matériau actif d'électrode formé est alors en solution aqueuse.

Selon un mode de réalisation, le matériau actif d'électrode alors obtenu peut être utilisé directement dans l'étape (a) du procédé ci-dessus.

Selon un autre mode de réalisation, ce matériau actif d'électrode peut être récupéré par filtration ou sédimentation, et éventuellement lavé puis séché. L'étape (a) du procédé ci-dessus peut alors consister en la redispersion ou resolubilisation de ce matériau actif d'électrode. La redispersion ou resolubilisation peut être réalisée à l'aide d'un mélangeur adapté qui peut être soit un mélangeur à hélice, avec un mobile du type hélice de marine associé à des racleurs le long des parois du récipient, soit un mélangeur-disperseur du type « floculateur » ou du type « rotor-stator ».

De préférence, le matériau actif d'électrode sous forme d'une solution ou d'une dispersion aqueuse est mis à disposition dans l'étape (a) dans un filtre, avantageusement équipé d'un agitateur.

Lors de l'étape (b), le mélange-maître contenant les charges conductrices carbonées est ajouté et mélangé à la solution ou dispersion aqueuse de matière active d'électrode à l'aide d'un mélangeur adapté qui peut être soit un mélangeur à hélice, avec un mobile du type hélice de marine associé à des racleurs le long des parois du récipient, soit un mélangeur-disperseur du type « floculateur » ou du type « rotor-stator ». De préférence, il s'agit d'un mélangeur de type floculateur, tel que décrit ci-dessus. Ce mode de mélange permet, à la différence des procédés de broyage, de ne pas trop casser les charges conductrices carbonées, en particulier lorsqu'il s'agit de nanotubes de carbone. Le liant contenu dans le mélange-maître est hydrosoluble ou hydrodispersible. Avantageusement, ledit liant comprend au moins un polysaccharide modifié tel qu'une cellulose modifiée, en particulier la carboxyméthylcellulose.

Le matériau actif composite pour électrode est récupéré après avoir été essoré et séché lors de l'étape (c). Le séchage consiste à retirer tout ou partie de l'eau, de préférence toute l'eau, de façon à obtenir un matériau anhydre. Le séchage est réalisé de préférence selon les techniques classiques de chauffage ou par pulvérisation (atomisation).

Ce procédé de préparation d'un matériau actif composite pour électrode présente l'avantage de permettre l'ajout du mélange-maître comprenant les charges conductrices carbonées au cours de la préparation du matériau actif d'électrode, qui se trouve en milieu aqueux au cours de sa synthèse, et donc de simplifier le procédé.

En variante, l'étape (b) du procédé de préparation d'un matériau actif composite pour électrode décrit ci-dessus peut être remplacée par une étape (b') consistant :
- à préparer un mélange par dispersion dans de l'eau du mélange-maître (éventuellement concentré) décrit précédemment, ledit mélange-maître contenant un liant hydrosoluble ou hydrodispersible, et
- à ajouter et mélanger ledit mélange-maître solubilisé ou dispersé, à la solution ou dispersion aqueuse du matériau actif d'électrode obtenue à l'étape (a).

Les proportions des différents composés utilisés dans les différentes variantes du procédé ci-dessus sont ajustées de telle manière que le matériau actif composite pour électrode obtenu renferme avantageusement de 1 à 5% en poids de charges conductrices carbonées.

Le matériau actif composite pour électrode obtenu, comprenant un matériau actif d'électrode et une charge conductrice carbonée, présente une morphologie adaptée à la fabrication d'électrodes. En outre, le matériau n'ayant pas subi de broyage mécanique, la granulométrie du matériau actif n'a pas été modifiée. De plus, le procédé de fabrication d'électrodes est simplifié.

Un autre objet de l'invention est par conséquent constitué par un matériau actif composite pour électrode, anode ou cathode (en particulier une cathode) susceptible d'être obtenu comme décrit ci-dessus, à partir du mélange-maître selon l'invention.

L'invention a également pour objet l'utilisation du mélange-maître (éventuellement concentré) tel que décrit précédemment pour la préparation de formulations liquides contenant des charges conductrices carbonées.

L'invention sera maintenant illustrée par les exemples suivants, qui n'ont pas pour but de limiter la portée de l'invention, définie par les revendications annexées. Dans ces exemples, il est fait référence aux figures annexées dans lesquelles :
- les Figures 1A et 1B illustrent, au MEB et à deux distances de travail différentes, la dispersion des NTC au sein du mélange-maître obtenu à l'exemple 1 ;
- les Figures 2A et 2B illustrent, au MEB et à deux distances de travail différentes, la dispersion des NTC au sein du mélange-maître obtenu à l'exemple 2 ;
- la Figure 3 illustre la capacité de décharge d'une batterie contenant une cathode obtenue à partir du mélange-maître selon l'invention, en fonction du nombre de cycles ; et
- la Figure 4 illustre les performances électrochimiques d'une l'électrode fabriquée à partir du mélange-maître selon l'invention.

### EXEMPLES

### Exemple 1 : Préparation d'un mélange-maître NTC / PVDF / NMP

Une solution à 5% en poids de PVDF (Kynar^{®} HSV 900 d'ARKEMA) a été réalisée au préalable par dissolution de la poudre du polymère dans la N-methyl pyrrolidone (NMP) ; la solution a été agitée à 50°C pendant 60 min.

Les NTC (Graphistrength^{®} C100 d'ARKEMA) ont été introduits dans la première trémie d'alimentation d'un co-malaxeur BUSS® MDK 46 (L/D = 11), équipé d'une vis d'extrusion de reprise et d'un dispositif de granulation. La solution de PVDF (Kynar^{®} HSV 900) à 5% dans la N-méthyl pyrrolidone (NMP) a été injectée sous forme liquide à 80°C dans la 1ère zone du co-malaxeur. Les consignes de température et le débit au sein du co-malaxeur étaient les suivantes : *Zone 1 :* 80°C, *Zone 2* : 80°C, *Vis* : 60°C, *débit :* 15 kg/h.

A la sortie de la filière, la découpe des granulés du mélange-maître a été réalisée à sec. Les granulés ont été conditionnés dans un récipient hermétique pour éviter la perte du NMP lors du stockage. La composition du mélange-maître final était la suivante : 30% en poids de nanotubes de carbone, 3,5% en poids de résine PVDF et 66,5% en poids de NMP.

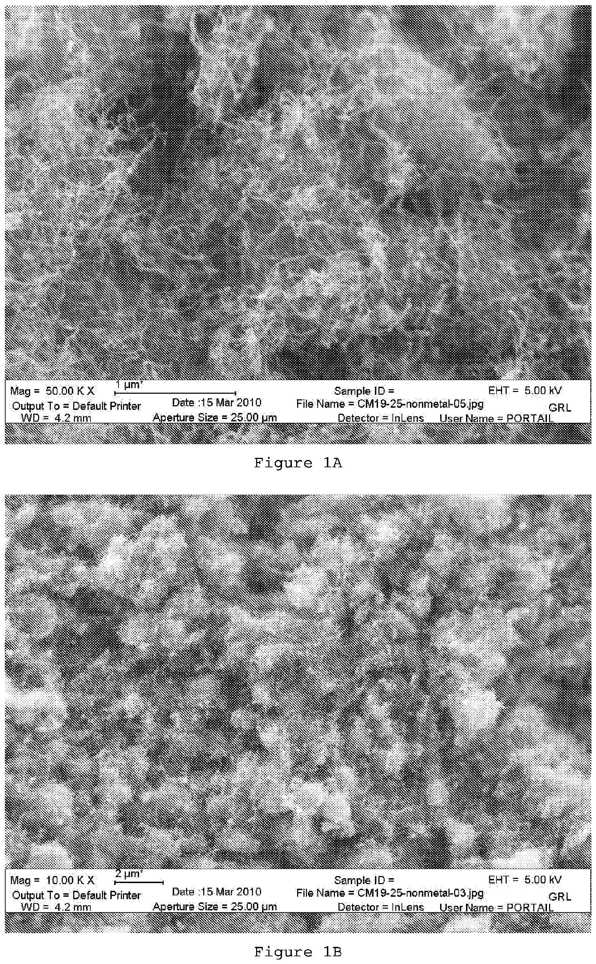

Les observations au microscope électronique à balayage (MEB) du mélange-maître séché ont montré que les nanotubes de carbone étaient bien dispersés (Figures 1A et 1B).

### Exemple 2 : Utilisation du mélange-maître NTC / PVDF / NMP pour la fabrication d'une électrode

*Etape a)* 20 g de granulés de mélange-maître de l'Exemple 1 ont été mouillés avec 160 g de solvant NMP. Après 2h d'imprégnation en statique à l'ambiante, les granulés du mélange-maître ont été dispersés dans le solvant à l'aide d'un mélangeur de type Silverson^{®} L4RT à 6000 tr/min pendant 15 minutes. Un échauffement important pendant l'opération de dispersion a été observé : le mélange contenant les NTC a atteint la température de 67°C. La solution obtenue a été désignée par « Premix NTC ».

*Etape b)* 14,3 g de Kynar^{®} HSV 900 ont été dissous dans 276g de solvant NMP à l'aide d'un agitateur de type floculateur pendant 4 heures.

*Etape c)* 279g de poudre de LiFePO4/C (LFP) (grade P1 de Phostech) ont été dispersés dans la solution de Kynar ; lors de cette étape, la poudre de LiFePO4 a été ajoutée progressivement sous agitation (600tr/min). La suspension obtenue a été désignée par « Premix LFP ».

*Etape d)* Afin d'obtenir une bonne dispersion des NTC autour de la matière active LFP, les 2 Premix NTC et LFP obtenus respectivement lors des étapes a) et c) ont été mélangés pendant 10 minutes à l'aide d'un agitateur floculateur à 600tr/min puis à l'aide d'un mélangeur Silverson^{®} L4RT pendant 15 minutes à 6000 tr/min et enfin à l'aide d'un broyeur à billes Retsch Minicer^{®} pendant 30 minutes à 2000 tr/min en utilisant des billes céramiques de 0,7 à 0,9mm. La composition de l'encre en matière sèche était la suivante : 2% de NTC ; 5% de Kynar^{®} HSV 900 et 93% de LiFePO4/C avec un taux de matière sèche de 40% dans le solvant NMP.

*Etape e)* A l'aide d'un filmographe type Sheen et d'un applicateur BYK-Gardner^{®} réglable, un film de 100µm d'épaisseur a été réalisé sur une feuille d'aluminium de 25µm.

*Etape f)* Le film réalisé lors de l'étape e) a été séché à 70°C pendant 4h en étuve ventilée puis compressé sous 200 bars.

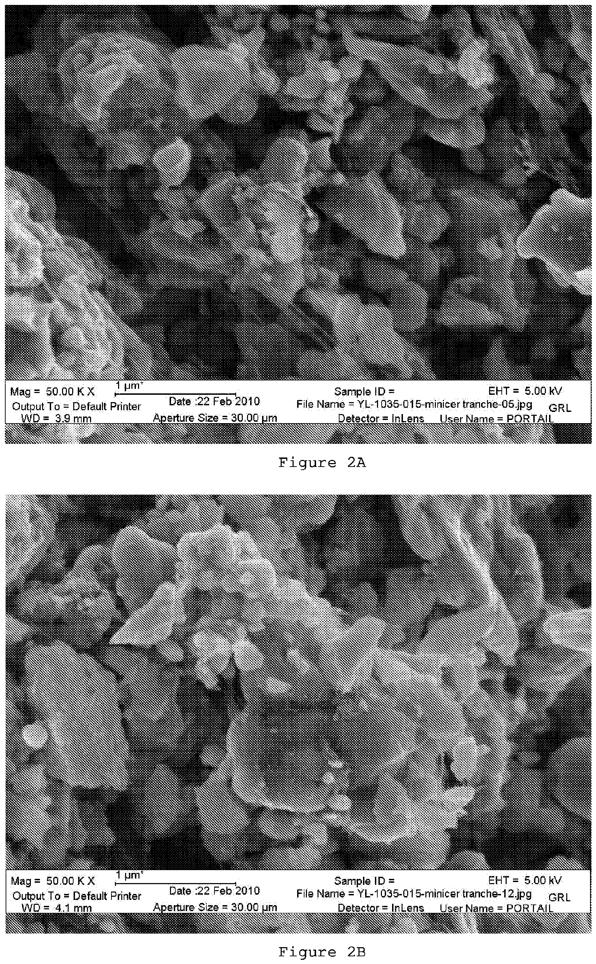

Des observations au MEB ont montré que les NTC sont bien dispersés autour des particules micrométriques de LiFePO4/C (Figures 2A et 2B).

### Exemple 3 : Evaluation des performances électrochimiques d'une électrode selon l'invention

Les laboratoires du CEA /LITEN à Grenoble ont évalué les performances électrochimiques de l'électrode positive (cathode) de l'Exemple 2 en l'associant à une anode de graphite.

La formulation de la cathode contenant 2 % en poids de NTC et 5 % en poids de liant PVDF a été comparée à une formulation standard contenant comme additif conducteur 2,5 % en poids de noir de carbone Super P de Timcal (CB) et 2,5 % en poids de fibres de carbone VGCF de Showa Denko (CF) avec 5 % en poids de liant PVDF. Cette formulation standard est obtenue par mélange de poudres sans passer par la préparation, puis la dilution, d'un mélange-maître selon l'invention.

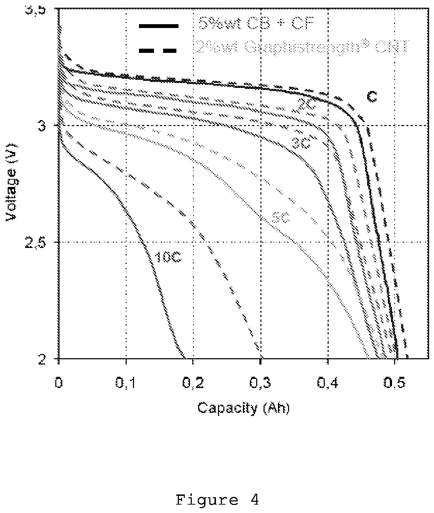

Sur une batterie Li ion d'une capacité de 500 mAh, les résultats obtenus à différents régimes de charge/ décharge 1C, 2C, 3C, 5C et 10C (cf. figure 4) montrent qu'on obtient des capacités supérieures avec la batterie contenant 2 % en poids de NTC dans la cathode par rapport à la batterie standard (CB+CF), et cela d'autant plus que le régime de charge/décharge est plus rapide (10C).

Cet exemple illustre donc les meilleures performances électrochimiques de l'électrode obtenue à partir d'un mélange-maître selon l'invention.

### Exemple 4 : Préparation d'un mélange-maître NTC / PVDF / NMP

Une solution à 5% en poids de PVDF (Kynar^{®} HSV 900 d'ARKEMA) a été réalisée au préalable par dissolution de la poudre du polymère dans la N-méthyl pyrrolidone (NMP) ; la solution a été agitée à 50°C pendant 60 min.

Les NTC (Graphistrength^{®} C100 d'ARKEMA) ont été introduits dans la première trémie d'alimentation d'un co-malaxeur BUSS MDK 46 (L/D = 11), équipé d'une vis d'extrusion de reprise et d'un dispositif de granulation. La solution de PVDF (Kynar^{®} HSV 900) à 5% dans la N-méthyl pyrrolidone (NMP) a été injectée sous forme liquide à 80°C dans la 1ère zone du co-malaxeur. Les consignes de température et le débit au sein du co-malaxeur étaient les suivantes : *Zone 1 :* 80°C, *Zone 2* : 80°C, *Vis* : 60°C, *débit :* 15 kg/h.

A la sortie de la filière, la découpe des granulés du mélange-maître a été réalisée à sec. Les granulés ont été conditionnés dans un récipient hermétique pour éviter la perte du NMP lors du stockage. La composition du mélange-maître final était la suivante : 25% en poids de nanotubes de carbone, 4% en poids de résine PVDF et 71% en poids de NMP.

Les observations au microscope électronique à balayage (MEB) du mélange-maître séché ont montré que les nanotubes de carbone étaient bien dispersés.

### Exemple 5 : Etude de la stabilité des batteries obtenues à partir du mélange-maître selon l'invention

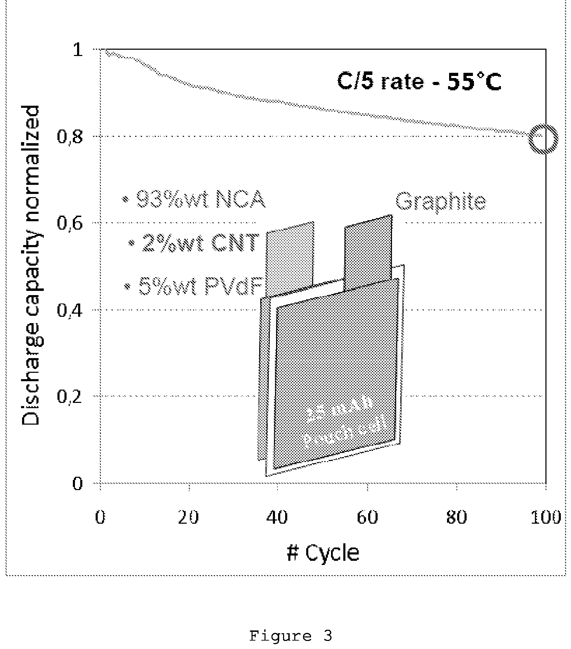

On a étudié la stabilité des batteries utilisant comme additif conducteur à la cathode des NTC « bruts » qui contiennent entre 2 à 3 % de Fe. Pour ce faire, des essais de vieillissement à 55 °C ont été réalisés par les laboratoires du CEA/LITEN sur des batteries du type « Pouch cell » de 25 mAh comprenant une cathode avec 93 % en poids de la matière active LiNi1/3Co1/3Al1/302(NCA) sans fer et 2 % en poids de NTC « bruts » et 5 % en poids de liant PVDF associée à une anode de graphite. Après 100 cycles à 55°C avec une vitesse de charge / décharge de C/5, la capacité de décharge baisse de 20 % mais l'analyse chimique par ICP de l'anode ne montre pas une augmentation de la teneur en fer qui reste égale à 3 ppm. Il n'y a donc pas de migration du fer contenu dans les NTC de la cathode vers l'anode (cf. figure n°3).

### Exemple 6 : Préparation d'un mélange-maître NTC / CMC / Eau

Une solution à 10% en poids de carboxyméthyl cellulose (CMC) de faible masse (grade Finnfix^{®} 2) a été réalisée au préalable par dissolution de la poudre du polymère de CMC dans de l'eau déminéralisée. La solution a été agitée à température ambiante pendant 60 min.

Les NTC (Graphistrength^{®} C100 d'ARKEMA) ont été introduits dans la première trémie d'alimentation d'un co-malaxeur BUSS® MDK 46 (L/D = 11), équipé d'une vis d'extrusion de reprise et d'un dispositif de granulation. La solution de CMC à 10 % dans l'eau déminéralisée a été injectée sous forme liquide à 30°C dans la 1ère zone du co-malaxeur. Le complément de CMC (22 % en masse) a été introduit sous forme de poudre dans la première trémie d'alimentation. Les consignes de température et le débit au sein du co-malaxeur étaient les suivants : *Zone 1 :* 30°C, *Zone 2* : 30°C, *Vis :* 30°C, *débit* : 15 kg/h.

A la sortie de la filière, la découpe des granulés du mélange-maître a été réalisée à sec. Les granulés ont été séchés dans une étuve à 80°C pendant 6 heures pour éliminer l'eau. La composition du mélange-maître final était la suivante : 40% en poids de nanotubes de carbone, 60% en poids de CMC.

Les granulés ont été conditionnés dans un récipient hermétique pour éviter la reprise d'eau lors du stockage.

### Exemple 7 : Préparation d'un mélange-maître NTC / CMC / Eau

Une solution à 10% en poids de carboxyméthyl cellulose (CMC) de faible masse (grade Finnfix^{®} 2) a été réalisée au préalable par dissolution de la poudre du polymère de CMC dans de l'eau déminéralisée. La solution a été agitée à température ambiante pendant 60 min.

20 kg de NTC (Graphistrength^{®} C100 d'ARKEMA) ont été introduits dans la première trémie d'alimentation d'un co-malaxeur BUSS® MDK 46 (L/D = 11), équipé d'une vis d'extrusion de reprise et d'un dispositif de granulation. 61,1 kg de solution de CMC à 10 % dans l'eau déminéralisée a été injectée sous forme liquide à 30°C dans la 1ère zone du co-malaxeur. Le complément de CMC (18,9 kg) a été introduit sous forme de poudre dans la première trémie d'alimentation. Les consignes de température et le débit au sein du co-malaxeur étaient les suivants : Zone 1 : 30°C, Zone 2 : 30°C, Vis : 30°C, débit : 15 kg/h.

La composition du mélange sortant de la filière était la suivante : 20 % NTC / 25 % CMC et 55 % eau.

A la sortie de la filière, la découpe des granulés du mélange-maître a été réalisée à sec. Les granulés ont été séchés dans une étuve à 80°C pendant 6 heures pour éliminer l'eau. La composition du mélange-maître final était la suivante : 45 % en poids de nanotubes de carbone, 55 % en poids de CMC.

Les granulés ont été conditionnés dans un récipient hermétique pour éviter la reprise d'eau lors du stockage.

### Exemple 8 : Dispersion d'un mélange-maître de NTC / CMC dans l'eau

Le mélange-maître séché obtenu dans l'exemple 7 est introduit dans l'eau chaude à 90°C sous une agitation ménagée, de façon à obtenir une concentration en nanotubes de 2 % en poids. L'agitation est maintenue pendant 1 heure ce qui entraîne un refroidissement progressif de la dispersion.

Dans ces conditions, on obtient une dispersion efficace des nanotubes dans l'eau.

Une telle dispersion peut être utilisée par exemple comme une base de formulation aqueuse pour la fabrication d'électrode ou de peintures.

### Exemple 9 : Préparation d'un mélange-maître à base de nanofibres de carbone

Une solution à 5% en poids de PVDF (Kynar^{®} HSV 900 d'ARKEMA) a été réalisée par dissolution de la poudre du polymère dans la N-méthyl pyrrolidone (NMP) ; la solution a été agitée à 50°C pendant 60 min.

Des nanofibres de carbone (VGCF^{®} de SHOWA DENKO) ont été introduites dans la première trémie d'alimentation d'un co-malaxeur BUSS^{®} MDK 46 (L/D = 11), équipé d'une vis d'extrusion de reprise et d'un dispositif de granulation. La solution de PVDF (Kynar^{®} HSV 900) à 5% dans la N-méthyl pyrrolidone (NMP) a été injectée sous forme liquide à 80°C dans la 1^{ère} zone du co-malaxeur. Les consignes de température et le débit au sein du co-malaxeur étaient les suivantes : *Zone 1* : 80°C, *Zone 2* : 80°C, *Vis* : 60°C, *débit :* 15 kg/h.

A la sortie de la filière, la découpe des granulés du mélange-maître a été réalisée à sec. Les granulés ont été conditionnés dans un récipient hermétique pour éviter la perte du NMP lors du stockage. La composition du mélange-maître final était la suivante : 25% en poids de nanofibres, 3,75% en poids de résine PVDF et 71,25% en poids de NMP.

### Exemple 10 (ne faisant pas partie de l'invention) : Préparation d'un mélange maître à base de noir de carbone

Une solution à 5% en poids de PVDF (Kynar^{®} HSV 900 d'ARKEMA) a été réalisée par dissolution de la poudre du polymère dans la N-méthyl pyrrolidone (NMP) ; la solution a été agitée à 50°C pendant 60 min.

Du noir de carbone (Super P^{®} de TIMCAL) a été introduit dans la première trémie d'alimentation d'un co-malaxeur BUSS^{®} MDK 46 (L/D = 11), équipé d'une vis d'extrusion de reprise et d'un dispositif de granulation. La solution de PVDF (Kynar^{®} HSV 900) à 5% dans la N-méthyl pyrrolidone (NMP) a été injectée sous forme liquide à 80°C dans la 1ère zone du co-malaxeur. Les consignes de température et le débit au sein du co-malaxeur étaient les suivantes : *Zone 1 :* 80°C, *Zone 2* : 80°C, *Vis* : 60°C, *débit :* 15 kg/h.

A la sortie de la filière, la découpe des granulés du mélange-maître a été réalisée à sec. Les granulés ont été conditionnés dans un récipient hermétique pour éviter la perte du NMP lors du stockage. La composition du mélange-maître final était la suivante : 25% en poids de noir de carbone, 3,75% en poids de résine PVDF et 71,25% en poids de NMP.

### Exemple 11 : utilisation du mélange-maître NTC / CMC pour la fabrication d'un matériau conducteur pour électrodes

*Etape préliminaire)* Le matériau actif d'électrode LiFePO₄ a été synthétisé selon la procédure décrite dans l'exemple 1 du brevet FR 2 848 549. 5 g du complexe nitrilotriacétique du fer (III) ont été introduits dans un réacteur autoclave dans 800 mL d'une solution d'hydrogénophosphate de lithium, Li₂HPO₄, à 0,0256 mol/l. La réaction a été réalisée à 200 °C sous pression autogène de 20 bars pendant 2 heures. Le mélange a été refroidi lentement, sans agitation, par inertie du réacteur (pendant environ 12 heures). Lorsque le réacteur était revenu à température ambiante et à pression atmosphérique, l'autoclave a été ouvert et la poudre récupérée a été filtrée sur Büchner. Le gâteau obtenu a été lavé à l'eau désionisée, puis essoré.

*Etape a)* Le gâteau essoré comprenant le matériau actif d'électrode LiFePO₄ préparé de façon préliminaire a été mis en suspension dans 100 ml d'eau dans le filtre à l'aide d'un agitateur de type floculateur.

*Etape b)* 134 mg du mélange-maître concentré NTC / CMC obtenu selon l'exemple 7 (constitué de 45% en poids de nanotubes de carbones et de 55% en poids de CMC) ont été dispersés dans la suspension préparée dans l'étape a).

*Etape c)* Après essorage du gâteau, le matériau actif composite LiFePO₄ / NTC est séché à 60 °C sous vide.

On a obtenu un matériau conducteur pour électrode LiFePO₄/NTC contenant 3% en poids de NTC. On a constaté que les NTC étaient avantageusement bien répartis à la surface des particules de LiFePO₄. La CMC est compatible avec les applications dans les batteries.

## Revendications

1. Mélange-maître comprenant :
a) des nanofibres et/ou des nanotubes de carbone, dont le taux est compris entre 15% et 40% en poids, de préférence entre 20% et 35% en poids par rapport au poids total du mélange-maître ;
b) au moins un solvant ;
c) au moins un liant polymère, qui représente de 1% à 40% en poids, de préférence de 2% à 30% en poids par rapport au poids total du mélange-maître ;
**caractérisé en ce qu'**il est sous forme solide agglomérée.

2. Mélange-maître selon la revendication 1, **caractérisé en ce que** ledit solvant est un solvant organique, de l'eau ou leurs mélanges en toutes proportions.

3. Mélange-maître selon la revendication 2, **caractérisé en ce que** ledit solvant organique est choisi parmi la N-méthyl pyrrolidone (NMP), le diméthyl sulfoxide (DMSO), le diméthylformamide (DMF), les cétones, les acétates, les furanes, les alkylcarbonates, les alcools et leurs mélanges.

4. Mélange-maître selon l'une des revendications 1 à 3, **caractérisé en ce que** ledit liant polymère est choisi dans le groupe constitué par les polysaccharides, les polysaccharides modifiés, les polyéthers, les polyesters, les polymères acryliques, les polycarbonates, les polyimines, les polyamides, les polyacrylamides, les polyuréthanes, les polyépoxydes, les polyphosphazènes, les polysulfones, les polymères halogénés, les caoutchoucs naturels, les élastomères fonctionnalisés ou non, notamment les élastomères à base de styrène, butadiène et/ou isoprène, et leurs mélanges.

5. Mélange-maître selon la revendication 4, **caractérisé en ce que** le liant polymère est choisi dans le groupe constitué par les polymères halogénés et de façon préférée parmi les polymères fluorés.

6. Mélange-maître selon la revendication 5, **caractérisé en ce que** le liant polymère fluoré est choisi parmi :
(i) ceux comprenant au moins 50% molaire d'au moins un monomère de formule (I) :
CFX₁=CX₂X₃ (I)
où X₁, X₂ et X₃ désignent indépendamment un atome d'hydrogène ou d'halogène (en particulier de fluor ou de chlore), tels que le poly(fluorure de vinylidène) (PVDF), de préférence sous forme α, le poly(trifluoroéthylène) (PVF3), le polytétrafluoroéthylène (PTFE), les copolymères de fluorure de vinylidène avec soit l'hexafluoropropylène (HFP), soit le trifluoroéthylène (VF3), soit le tétrafluoroéthylène (TFE), soit le chlorotrifluoroéthylène (CTFE), les copolymères fluoroéthylène / propylène (FEP), les copolymères d'éthylène avec soit le fluoroéthylène/propylène (FEP), soit le tétrafluoroéthylène (TFE), soit le chlorotrifluoroéthylène (CTFE) ;
(ii) ceux comprenant au moins 50% molaire d'au moins un monomère de formule (II) :
R-O-CH-CH₂ (II)
où R désigne un radical alkyle perhalogéné (en particulier perfluoré), tels que le perfluoropropyl vinyléther (PPVE), le perfluoroéthyl vinyléther (PEVE) et les copolymères d'éthylène avec le perfluorométhylvinyl éther (PMVE).

7. Mélange-maître selon la revendication 4, **caractérisé en ce que** le liant polymère est choisi dans le groupe constitué par les polysaccharides modifiés et de façon préférée parmi les celluloses modifiées telles que la carboxyméthyl cellulose.

8. Mélange-maître selon l'une quelconque des revendications 1 à 6, **caractérisé en ce que** qu'il renferme : de 20 à 30% en poids de nanotubes de carbone, de 2 à 5% en poids de résine PVDF et de 65 à 75% en poids de NMP.

9. Utilisation du mélange-maître selon l'une des revendications 1 à 8 pour fabriquer une électrode.

10. Procédé de préparation d'un mélange-maître selon l'une des revendications 1 à 8 comprenant :
(a) la dissolution d'une poudre du polymère liant dans le solvant, pour former une solution ;
(b) le mélange de ladite solution avec les nanofibres et/ou les nanotubes de carbone, dans un dispositif de compoundage ;
(c) le malaxage dudit mélange.

11. Procédé selon la revendication 10, **caractérisé en ce que** le malaxage est réalisé par voie de compoundage à l'aide d'une extrudeuse à double vis co-rotative ou contre-rotative ou à l'aide d'un co-malaxeur.

12. Procédé selon la revendication 10 ou 11 comprenant en outre une étape d'élimination de tout ou partie du solvant.

13. Mélange-maître concentré obtenu selon le procédé de la revendication 12.

14. Mélange-maître concentré selon la revendication 13, **caractérisé en ce qu'**il renferme de 20 à 98%, de préférence de 25 à 60%, voire de 40 à 60% en poids de nanofibres de carbone et/ou de nanotubes de carbone, dans le cas d'un solvant aqueux, ou de 60 à 95% en poids de nanofibres de carbone et/ou de nanotubes de carbone dans le cas d'un solvant organique, et avantageusement un rapport massique liant/charge carbonée inférieur à 2, voire inférieur à 1,6.

15. Procédé de préparation d'une électrode, comprenant les étapes suivantes :
a) La préparation d'un mélange par dispersion dans un solvant de dispersion du mélange-maître selon l'une des revendications 1 à 8 ou 13 à 14, ou obtenu suivant le procédé selon l'une des revendications 10 et 11, contenant au moins un premier liant et éventuellement au moins un premier solvant ;
b) La préparation d'une solution par dissolution d'au moins un second liant polymère dans au moins un second solvant ;
c) L'ajout d'un matériau actif d'électrode à ladite solution ;
d) Le mélange des produits issus des étapes a) et c) ;
e) Le dépôt de la composition ainsi obtenue sur un substrat pour former un film ;
f) Le séchage dudit film.

16. Procédé de préparation d'un matériau actif composite pour électrode, comprenant les étapes suivantes :
a) La mise à disposition d'un matériau actif d'électrode sous forme d'une solution ou d'une dispersion aqueuse ;
b) L'ajout et le mélange du mélange-maître selon l'une des revendications 1 à 8 ou 13 à 14, ou obtenu suivant le procédé selon l'une des revendications 10 et 11, ledit mélange-maître contenant un liant hydrosoluble ou hydrodispersible, à la solution ou dispersion aqueuse obtenue à l'étape (a) ; ;
c) L'essorage et le séchage du mélange obtenu à l'étape (b).

17. Utilisation du mélange-maître selon l'une quelconque des revendications 1 à 8, 13 et 14 pour la préparation de formulations liquides contenant des nanofibres et/ou des nanotubes de carbone, de préférence des nanotubes de carbone bruts.

## Patentansprüche

1. Masterbatch, umfassend:
a) Kohlenstoff-Nanofasern und/oder -Nanoröhrchen, deren Gehalt zwischen 15 und 40 Gewichts-%, vorzugsweise zwischen 20 und 35 Gewichts-%, bezogen auf das Gesamtgewicht des Masterbatches, liegt;
b) mindestens ein Lösungsmittel;
c) mindestens einen polymeren Binder, der 1 bis 40 Gewichts-%, vorzugsweise 2 bis 30 Gewichts-%, bezogen auf das Gesamtgewicht des Masterbatches, ausmacht; **dadurch gekennzeichnet, dass** es eine agglomerierte feste Form aufweist.

2. Masterbatch nach Anspruch 1, **dadurch gekennzeichnet, dass** das Lösungsmittel ein organisches Lösungsmittel, Wasser oder ihre Mischungen in beliebigen Mengenverhältnissen ist.

3. Masterbatch nach Anspruch 2, **dadurch gekennzeichnet, dass** das organische Lösungsmittel aus N-Methylpyrrolidon (NMP), Dimethylsulfoxid (DMSO), Dimethylformamid (DMF), Ketonen, Acetaten, Furanen, Alkylcarbonaten, Alkoholen und ihren Mischungen ausgewählt ist.

4. Masterbatch nach einem der Ansprüche 1 bis 3, **dadurch gekennzeichnet, dass** der polymere Binder aus der Gruppe ausgewählt ist bestehend aus Polysacchariden, modifizierten Polysacchariden, Polyethern, Polyestern, Acrylpolymeren, Polycarbonaten, Polyiminen, Polyamiden, Polyacrylamiden, Polyurethanen, Polyepoxiden, Polyphosphazenen, Polysulfonen, halogenierten Polymeren, Naturkautschuken, funktionalisierten oder nicht-funktionalisierten Elastomeren, insbesondere Elastomeren auf Basis von Styrol, Butadien und/oder Isopren, sowie ihren Mischungen.

5. Masterbatch nach Anspruch 4, **dadurch gekennzeichnet, dass** der polymere Binder aus der Gruppe bestehend aus halogenierten Polymeren und vorzugsweise aus fluorhaltigen Polymeren ausgewählt ist.

6. Masterbatch nach Anspruch 5, **dadurch gekennzeichnet, dass** der fluorhaltige polymere Binder ausgewählt ist aus:
(i) fluorhaltigen Polymeren, die mindestens 50 Mol-% von mindestens einem Monomer mit der Formel (I) umfassen:
CFX₁=CX₂X₃ (I),
wobei X₁, X₂ und X₃ unabhängig ein Wasserstoff- oder Halogenatom (insbesondere ein Fluor- oder Chloratom) bezeichnen, beispielsweise Polyvinylidenfluorid (PVDF), vorzugsweise in der α-Form, Polytrifluorethylen (PVF3), Polytetrafluorethylen (PTFE), Vinylidenfluorid-Copolymere entweder mit Hexafluorpropylen (HFP) oder mit Trifluorethylen (VF3) oder mit Tetrafluorethylen (TFE) oder mit Chlortrifluorethylen (CTFE), Fluorethylen/Propylen-Copolymere (FEP), Ethylen-Copolymere entweder mit Fluorethylen/Propylen (FEP) oder mit Tetrafluorethylen (TFE) oder mit Chlortrifluorethylen (CTFE);
(ii) fluorhaltigen Polymeren, die mindestens 50 Mol-% von mindestens einem Monomer mit der Formel (II) umfassen:
R-O-CH-CH₂ (II),
wobei R einen perhalogenierten (insbesondere perfluorierten) Alkylrest bezeichnet, beispielsweise Perfluorpropylvinylether (PPVE), Perfluorethylvinylether (PEVE) und Ethylen-Copolymere mit Perfluormethylvinylether (PMVE).

7. Masterbatch nach Anspruch 4, **dadurch gekennzeichnet, dass** der polymere Binder aus der Gruppe bestehend aus modifizierten Polysacchariden und vorzugsweise aus modifizierten Cellulosen wie Carboxymethylcellulose ausgewählt ist.

8. Masterbatch nach einem der Ansprüche 1 bis 6, **dadurch gekennzeichnet, dass** es Folgendes enthält: 20 bis 30 Gewichts-% Kohlenstoff-Nanoröhrchen, 2 bis 5 Gewichts-% PVDF-Harz und 65 bis 75 Gewichts-% NMP.

9. Verwendung des Masterbatches nach einem der Ansprüche 1 bis 8 zum Herstellen einer Elektrode.

10. Verfahren zur Herstellung eines Masterbatches nach einem der Ansprüche 1 bis 8, umfassend:
(a) Auflösen eines Pulvers des bindenden Polymers in dem Lösungsmittel zum Herstellen einer Lösung;
(b) Mischen der Lösung mit den Kohlenstoff-Nanofasern und/oder -Nanoröhrchen in einer Compoundierungsvorrichtung;
(c) Kneten der Mischung.

11. Verfahren nach Anspruch 10, **dadurch gekennzeichnet, dass** das Kneten über eine Compoundierung mithilfe eines gleichläufigen oder gegenläufigen Doppelschneckenextruders oder mithilfe eines Ko-Kneters erfolgt.

12. Verfahren nach Anspruch 10 oder 11, das ferner einen Schritt zum vollständigen oder teilweisen Entfernen des Lösungsmittels umfasst.

13. Konzentriertes Masterbatch, das nach dem Verfahren von Anspruch 12 erhalten wird.

14. Konzentriertes Masterbatch nach Anspruch 13, **dadurch gekennzeichnet, dass** es 20 bis 98 Gewichts-%, vorzugsweise 25 bis 60 Gewichts-%, sogar 40 bis 60 Gewichts-% Kohlenstoff-Nanofasern und/oder -Nanoröhrchen im Falle eines wässrigen Lösungsmittels, oder 60 bis 95 Gewichts-% Kohlenstoff-Nanofasern und/oder -Nanoröhrchen im Falle eines organischen Lösungsmittels enthält, und vorteilhafterweise ein Gewichtsverhältnis Binder/Füllelement auf Kohlenstoffbasis unter 2, sogar unter 1,6.

15. Verfahren zur Herstellung einer Elektrode, das folgende Schritte umfasst:
a) Herstellen einer Mischung durch Dispergieren, in einem Dispergierungslösungsmittel, des Masterbatches nach einem der Ansprüche 1 bis 8 oder 13 bis 14 oder das nach dem Verfahren nach einem der Ansprüche 10 und 11 erhalten wird, das mindestens einen ersten Binder und gegebenenfalls mindestens ein erstes Lösungsmittel enthält;
b) Herstellen einer Lösung durch Auflösen von mindestens einem zweiten polymeren Binder in mindestens einem zweiten Lösungsmittel;
c) Zugeben eines aktiven Elektrodenmaterials zu der Lösung;
d) Mischen der Produkte aus Schritt a) und c);
e) Aufbringen der so erhaltenen Zusammensetzung auf ein Substrat zum Bilden eines Films;
f) Trocknen des Films.

16. Verfahren zur Herstellung eines aktiven Verbundmaterials für eine Elektrode, das folgende Schritte umfasst:
a) Bereitstellen eines aktives Elektrodenmaterials in Form einer Lösung oder einer wässrigen Dispersion;
b) Zugeben und Vermischen des Masterbatches nach einem der Ansprüche 1 bis 8 oder 13 bis 14 oder das nach dem Verfahren nach einem der Ansprüche 10 und 11 erhalten wird, wobei das Masterbatch einen wasserlöslichen oder in Wasser dispergierbaren Binder enthält, zu bzw. mit der Lösung oder wässrigen Dispersion, die in Schritt (a) erhalten wurde;
c) Schleudern und Trocknen der in Schritt (b) erhaltenen Mischung.

17. Verwendung des Masterbatches nach einem der Ansprüche 1 bis 8, 13 und 14 zur Herstellung von Flüssigkeitsformulierungen, die Kohlenstoff-Nanofasern und/oder -Nanoröhrchen enthalten, vorzugsweise unmodifizierte Kohlenstoff-Nanoröhrchen.

## Claims

1. Masterbatch comprising:
a) carbon nanofibres and/or nanotubes, the content of which is between 15 wt% and 40 wt%, preferably between 20 wt% and 35 wt%, relative to the total weight of the masterbatch;
b) at least one solvent;
c) at least one polymer binder, which represents from 1 wt% to 40 wt%, preferably from 2 wt% to 30 wt% relative to the total weight of the masterbatch;
**characterized in that** it is in agglomerated solid form.

2. Masterbatch according to Claim 1, **characterized in that** said solvent is an organic solvent, water or mixtures thereof in any proportions.

3. Masterbatch according to Claim 2, **characterized in that** said organic solvent is chosen from N-methyl pyrrolidone (NMP), dimethyl sulphoxide (DMSO), dimethylformamide (DMF), ketones, acetates, furans, alkyl carbonates, alcohols and mixtures thereof.

4. Masterbatch according to one of Claims 1 to 3, **characterized in that** said polymer binder is chosen from the group consisting of polysaccharides, modified polysaccharides, polyethers, polyesters, acrylic polymers, polycarbonates, polyimines, polyamides, polyacrylamides, polyurethanes, polyepoxides, polyphosphazenes, polysulphones, halogenated polymers, natural rubbers, functionalized or unfunctionalized elastomers, especially elastomers based on styrene, butadiene and/or isoprene, and mixtures thereof.

5. Masterbatch according to Claim 4, **characterized in that** the polymer binder is chosen from the group consisting of halogenated polymers and preferably from fluoropolymers.

6. Masterbatch according to Claim 5, **characterized in that** the fluoropolymer binder is chosen from:
(i) those comprising at least 50 mol% of at least one monomer of formula (I):
CFX₁=CX₂X₃ (I)
where X₁, X₂ and X₃ independently denote a hydrogen atom or halogen atom (in particular a fluorine or chlorine atom), such as polyvinylidene fluoride (PVDF), preferably in α form, polytrifluoroethylene (PVF3), polytetrafluoroethylene (PTFE), copolymers of vinylidene fluoride with either hexafluoropropylene (HFP), or trifluoroethylene (VF3), or tetrafluoroethylene (TFE), or chlorotrifluoroethylene (CTFE), fluoroethylene/propylene (FEP) copolymers, copolymers of ethylene with either fluoroethylene/propylene (FEP), or tetrafluoroethylene (TFE), or chlorotrifluoroethylene (CTFE);
(ii) those comprising at least 50 mol% of at least one monomer of formula (II):
R-O-CH-CH₂ (II)
where R denotes a perhalogenated (in particular perfluorinated) alkyl radical, such as perfluoropropyl vinyl ether (PPVE), perfluoroethyl vinyl ether (PEVE) and copolymers of ethylene with perfluoromethyl vinyl ether (PMVE).

7. Masterbatch according to Claim 4, **characterized in that** the polymer binder is chosen from the group consisting of modified polysaccharides and more preferably from modified celluloses such as carboxymethyl cellulose.

8. Masterbatch according to any one of Claims 1 to 6, **characterized in that** it contains: from 20 to 30 wt% of carbon nanotubes, from 2 to 5 wt% of PVDF resin and from 65 to 75 wt% of NMP.

9. Use of the masterbatch according to one of Claims 1 to 8 for manufacturing an electrode.

10. Process for preparing a masterbatch according to one of Claims 1 to 8 comprising:
(a) dissolving a powder of the binding polymer in the solvent to form a solution;
(b) mixing said solution with the carbon nanofibers and/or nanotubes, in a compounding device;
(c) kneading said mixture.

11. Process according to Claim 10, **characterized in that** the kneading is carried out via a compounding route using a co-rotating or counter-rotating twinscrew extruder or using a co-kneader.

12. Process according to Claim 10 or 11 further comprising a step of removing all or part of the solvent.

13. Concentrated masterbatch obtained according to the process of Claim 12.

14. Concentrated masterbatch according to Claim 13, **characterized in that** it contains from 20 to 98%, preferably from 25 to 60%, or even from 40 to 60% by weight of carbon nanofibres and/or carbon nanotubes, in the case of an aqueous solvent, or from 60 to 95% by weight of carbon nanofibres and/or carbon nanotubes, in the case of an organic solvent, and advantageously a binder/carbon-based filler weight ratio of less than 2, or even of less than 1.6.

15. Process for preparing an electrode, comprising the following steps:
a) the preparation of a mixture by dispersion in a dispersion solvent of the masterbatch according to one of Claims 1 to 8 or 13 and 14, or obtained according to the process according to either of Claims 10 and 11, containing at least a first binder and optionally at least a first solvent;
b) the preparation of a solution by dissolving at least a second polymer binder in at least a second solvent;
c) the addition of an electrode active material to said solution;
d) the mixing of the products resulting from steps a) and c);
e) the deposition of the composition thus obtained on a substrate in order to form a film;
f) the drying of said film.

16. Process for preparing a composite active material for an electrode, comprising the following steps:
a) the provision of an electrode active material in the form of an aqueous solution or dispersion;
b) the addition and mixing of the masterbatch according to one of Claims 1 to 8 or 13 and 14, or obtained according to the process according to either of Claims 10 and 11, said masterbatch containing a water-soluble or water-dispersible binder, to the aqueous solution or dispersion obtained in step (a);
c) the suction-filtering and drying of the mixture obtained in step (b).

17. Use of the masterbatch according to any one of Claims 1 to 8, 13 and 14 for the preparation of liquid formulations containing carbon nanofibres and/or nanotubes, preferably raw carbon nanotubes.
